# EUROPÄISCHE PATENTANMELDUNG

(11) **EP 2 415 827 A1**
(43) Veröffentlichungstag der Anmeldung: **08.02.2012**
(21) Anmeldenummer: 10171858.3
(22) Anmeldetag: 04.08.2010
(51) Int. Cl.: C08K 3/32, C08K 3/34, C08K 9/04, C08L 77/00

(54) **Flammgeschützte Polyamide mit Schichtsilikaten**

(71) Anmelder: BASF SE, 67056 Ludwigshafen (DE)
(72) Erfinder: Die Erfindernennung liegt noch nicht vor

(57) **Zusammenfassung**

Thermoplastische Formmassen, enthaltend
A) 10 bis 97 Gew. % eines thermoplastischen Polyamides,
B) 1 bis 20 Gew. % roter Phosphor,
C) 0,1 bis 10 Gew. % eines delaminierten Schichtsilikates mit überwiegend unpolaren Gruppen,
D) 0 bis 70 Gew. % weiterer Zusatzstoffe,

wobei die Summe der Komponenten A) bis D) 100 % ergibt.

## Beschreibung

Die Erfindung betrifft thermoplastische Formmassen enthaltend

Thermoplastische Formmassen, enthaltend
A) 10 bis 97 Gew. % eines thermoplastischen Polyamides
B) 1 bis 20 Gew. % roter Phosphor
C) 0,1 bis 10 Gew. % eines delaminierten Schichtsilikates mit überwiegend unpolaren Gruppen
D) 0 bis 70 Gew. % weiterer Zusatzstoffe,
   wobei die Summe der Komponenten A) bis D) 100 % ergibt.

Weiterhin betrifft die Erfindung die Verwendung der erfindungsgemäßen Formmassen zur Herstellung von Fasern, Folien und Formkörpern jeglicher Art, sowie die hierbei erhältlichen Formkörper.

Thermoplastische Polyamide wie PA6 und PA66 werden häufig in Form von glasfaserverstärkten Formmassen als Konstruktionswerkstoffe für Bauteile, die während ihrer Lebensdauer erhöhten Temperaturen ausgesetzt sind, eingesetzt.

Die Abmischung von Polyamiden mit rotem Phosphor zur Flammschutzausrüstung ist seit langem bekannt, z.B. aus DE-A 19 31 387 und DE-A 19 67 354.

Sind verstärkte flammgeschützte Polyamide für Anwendungen erforderlich, resultiert die Zugabe z.B. von Glasfasern in einem schlechten Brandverhalten. Die Ursache liegt in einem sog. Dochteffekt der Glasfasern, wodurch der Probekörper auch nach Entfernen der Zündflamme weiterbrennt.

Die Verwendung von delaminierten Schichtsilikaten in Polyamiden ist z.B. aus E.P. Giannelis, Adv. Mater S.S. 29-35, 1996, bekannt.

Die Kombination von rotem Phosphor mit polaren Schichtsilikaten ist aus den DE-A 19 71 4900, DE 19 70 5998 und EP 16 26 066 bekannt.

Aufgabe der vorliegenden Erfindung war es daher, flammgeschützte Polyamide zur Verfügung zu stellen, welche hinsichtlich der mechanischen Eigenschaften vergleichbar mit faserverstärkten und flammgeschützten Polyamidformmassen sind (insbesondere in Bezug auf Steifigkeit und Reißfestigkeit), jedoch eine bessere Phosphorstabilität und Brandverhalten, insbesondere für sehr dünnwandige Formkörper, aufweisen.
Demgemäß wurden die eingangs definierten Formmassen gefunden. Bevorzugte Ausführungsformen sind den Unteransprüchen zu entnehmen

Überraschenderweise führt die Kombination von rotem Phosphor mit delaminierten unpolaren Schichtsilikaten zu einer besseren Phosphorstabilität, so dass Formkörper in Umgebungen mit hoher Luftfeuchtigkeit auch bei erhöhter Temperatur eingesetzt werden können. Die Flammschutzeigenschaften sind bei sehr dünnwandigen Formteilen wesentlich verbessert, wobei die mechanischen Eigenschaften mit faserverstärkten Polyamidformmassen vergleichbar sind.

Als Komponente A) enthalten die erfindungsgemäßen Formmassen 10 bis 97, vorzugsweise 25 bis 96 und insbesondere 30 bis 95 Gew.-% mindestens eines Polyamides.

Die Polyamide der erfindungsgemäßen Formmassen weisen im allgemeinen eine Viskositätszahl von 90 bis 350, vorzugsweise 110 bis 240 ml/g auf, bestimmt in einer 0,5 gew.-%igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis
8 Kohlenstoffatomen sowie m-Xylylendiamin (z.B. Ultramid^{®} X17 der BASF SE, ein 1:1 molares Verhältnis von MXDA mit Adipinsäure), Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten (z.B. Ultramid® C31 der BASF SE).

Weiterhin geeignete Polyamide sind erhältlich aus w-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/61/MXD6).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

### AB-Polymere:

- PA 4: Pyrrolidon
- PA 6: ε-Caprolactam
- PA 7: Ethanolactam
- PA 8: Capryllactam
- PA 9: 9-Aminopelargonsäure
- PA 11: 11-Aminoundecansäure
- PA 12: Laurinlactam
- AA/BB-Polymere PA 46: Tetramethylendiamin, Adipinsäure
- PA 66: Hexamethylendiamin, Adipinsäure
- PA 69: Hexamethylendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA 9T: 1,9-Nonandiamin, Terephthalsäure
- PA MXD6: m-Xylylendiamin, Adipinsäure

- PA 6l: Hexamethylendiamin, Isophthalsäure
- PA 6-3-T: Trimethylhexamethylendiamin, Terephthalsäure
- PA 6/6T: (siehe PA 6 und PA 6T)
- PA 6/66: (siehe PA 6 und PA 66)
- PA 6/12: (siehe PA 6 und PA 12)
- PA 66/6/610: (siehe PA 66, PA 6 und PA 610)
- PA 61/6T: (siehe PA 6l und PA 6T)
- PA PACM 12: Diaminodicyclohexylmethan, Laurinlactam
- PA 6l/6T/PACM: wie PA 6l/6T + Diaminodicyclohexylmethan
- PA 12/MACMI: Laurinlactam, Dimethyl-diaminodicyclohexylmethan, Isophthalsäure
- PA 12/MACMT: Laurinlactam, Dimethyl-diaminodicyclohexylmethan, Terephthalsäure
- PA PDA-T: Phenylendiamin, Terephthalsäure

Als Komponente B) enthalten die erfindungsgemäßen Formmassen 1 bis 20, vorzugsweise 2 bis 15 und insbesondere 3 bis 10 Gew.-% roten Phosphor.
Die mittlere Teilchengröße (d₅₀) der in den Formmassen verteilten Phosphorpartikel liegt üblicherweise im Bereich bis zu 2 mm, vorzugsweise 0,0001 bis 0,5 mm.
In der Regel kann der Phosphor in Pulverform leicht in die erfindungsgemäßen Formmassen eingearbeitet werden, wobei der Phosphor meist als phlegmatisierter Phosphor vorliegt (s. EP-A 176 836, EP-A 384232 und DE-A 19648 503). Außerdem sind Konzentrate von phlegmatisiertem Phosphor z. B. in einem Polyamid oder einem Elastomeren geeignet, welche Phosphorgehalte bis zu 60 Gew.-% aufweisen können.

Als Komponente C) enthalten die erfindungsgemäßen Formmassen 0,1 bis 10, vorzugsweise 0,8 bis 3 und insbesondere 0,9 bis 2,5 Gew.-% eines delaminierten Schichtsilikates (Phyllosilikat), welches überwiegend unpolare Gruppen enthält.

Unter einem Schichtsilikat versteht man im allgemeinen Silikate, in welchen die Si0₄-Tetraeder in zweidimensionalen unendlichen Netzwerken verbunden sind. (Die empirische Formel für das Anion lautet (Si₂0₅²⁻)ₙ. Die einzelnen Schichten sind durch die zwischen ihnen liegenden Kationen miteinander verbunden, wobei meistens als Kationen Na, K, Mg, Al oder/und Ca in den natürlich vorkommenden Schichtsilikaten vorliegen.
Die Schichtdicken derartiger Silikate vor der Delaminierung betragen üblicherweise von 5 bis 100 Å, vorzugsweise 5 bis 50 und insbesondere 8 bis 20 Å.
Als Beispiele für synthetische und natürliche Schichtsilikate (Phyllosilikate) seien Montmorillonit, Smectit, Illit, Sepiolit, Palygorskit, Muscovit, Allevardit, Amesit, Hectorit, Fluorhectorit, Saponit, Beidellit, Talkum, Nontronit, Stevensit, Bentonit, Glimmer, Vermiculit, Fluorvermiculit, Halloysit und Fluor enthaltende synthetische Mica-Typen genannt, wobei Bentonit besonders bevorzugt ist.

Unter einem delaminierten Schichtsilikat im Sinne der Erfindung sollen Schichtsilikate verstanden werden, bei welchen durch Umsetzung mit sogenannten Hydrophobierungsmitteln und gegebenenfalls anschließender Monomerzugabe (sog. Quellung z. B. mit sog. AH-Salzen) die Schichtabstände zunächst vergrößert werden.
Durch anschließende Polykondensation oder Mischung z. B. durch Konfektionierung des hydrophobierten und gegebenenfalls gequollenen Schichtsilikates mit Polyamiden erfolgt die Delaminierung der Schichten, welche im Formkörper vorzugsweise zu einem Schichtabstand von mindestens 5 Å, vorzugsweise mindestens 15 Å und insbesondere mindestens 40 Å führen. Zur Vergrößerung der Schichtabstände (Hydrophobierung) werden die Schichtsilikate (vor der Herstellung der erfindungsgemäßen Formmassen) mit sogenannten Hydrophobierungsmitteln umgesetzt, welche oft auch als Oniumionen oder Oniumsalze bezeichnet werden.
Die Kationen der Schichtsilikate werden durch organische Hydrophobierungsmittel ersetzt, wobei durch die Art des organischen Restes die gewünschten Schichtabstände eingestellt werden können, die sich nach der Art des jeweiligen Monomeren oder Polymeren, in welches das Schichtsilikat eingebaut werden soll, richten.
Der Austausch der Metallionen kann vollständig oder teilweise erfolgen. Bevorzugt ist ein nicht vollständiger Austausch der Metallionen. Die Menge der austauschbaren Metallionen wird üblicherweise in Millieäquivalenten (meq pro 100 g Schichtsilikat) angegeben und als lonenaustauschkapazität bezeichnet).
Bevorzugt sind Schichtsilikate mit einer Kationenaustauschkapazität von mindestens 50, vorzugsweise 80 bis 130 meq/100 g.

Insbesondere bevorzugt ist ein Austausch der Metallionen der Komponente C), welcher nicht vollständig ist, d.h. man nennt dies in der Regel eine Unterbelegung des Schichtsilikates. Bevorzugt beträgt der Gehalt des Hydrophobierungsmittels, bezogen auf 100 Gew % delaminiertes Schichsilikat C) von 25 bis 50, bevorzugt von 25 bis 45 %.
Geeignete Hydrophobierungsmittel (auch Interkalationsmittel genannt) leiten sich von Ammoniumionen ab, welche einen oder mehrere organische Substituenten tragen können: 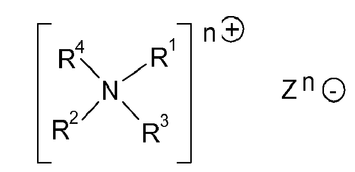 wobei die Substituenten folgende Bedeutung haben:
- R¹, R²: unabhängig voneinander Wasserstoff, eine Alkylgruppe mit 1 bis 4 C-Atomen, vorzugsweise Methyl- oder Ethylgruppe oder, eine C₁ bis Ca Alkylgruppe, welche primäre Aminogruppen enthält,
- R³, R⁴: unabhängig voneinander Wasserstoff, einen geradkettigen, verzweigten, gesättigten oder ungesättigten C-Rest mit 1 bis 40, vorzugsweise 16 bis 18 C-Atomen,
- n: für eine ganze Zahl von 1 bis 3
- Z: für ein Anion steht.

Insbesondere bevorzugt sind delaminierte Schichtsilikate C), welche nur unpolare Gruppen enthalten, wobei Hydrophobierungsmittel auf Basis von Dimethyldistearylammoniumsalzen und/oder Octadecylammoniumsalzen bevorzugt sind.

Geeignete Anionen Z leiten sich von Protonen liefernden Säuren, insbesondere Mineralsäuren ab, wobei Halogene wie Chlor, Brom, Fluor, Iod, Sulfat, Sulfonat, Phosphat, Phosphonat, Phosphit und Carboxylat, insbesondere Acetat, bevorzugt sind.

Die als Ausgangsstoffe verwendeten Schichtsilikate werden in der Regel in Form einer Suspension umgesetzt. Das bevorzugte Suspendiermittel ist Wasser, gegebenenfalls in Mischung mit Alkoholen, insbesondere niederen Alkoholen mit 1 bis 3 Kohlenstoffatomen. Es kann vorteilhaft sein, zusammen mit dem wäßrigen Medium einen Kohlenwasserstoff, zum Beispiel Heptan, einzusetzen, da die hydrophobierten Schichtsilikate mit Kohlenwasserstoffen gewöhnlich verträglicher sind als mit Wasser.

Weitere geeignete Beispiele für Suspendiermittel sind Ketone und Kohlenwasserstoffe. Gewöhnlich wird ein mit Wasser mischbares Lösungsmittel bevorzugt. Bei der Zugabe des Hydrophobierungsmittels zum Schichtsilikat tritt ein Ionenaustausch ein, wodurch das Schichtsilikat üblicherweise hydrophober wird und aus der Lösung ausfällt. Das als Nebenprodukt des Ionenaustausch entstehende Metallsalz ist vorzugsweise wasserlöslich, so daß das hydrophobierte Schichtsilikat als kristalliner Feststoff durch z. B. Abfiltrieren abgetrennt werden kann.

Der Ionenaustausch ist von der Reaktionstemperatur weitgehend unabhängig. Die Temperatur liegt vorzugsweise über dem Kristallisationspunkt des Mediums und unter seinem Siedepunkt. Bei wäßrigen Systemen liegt die Temperatur zwischen 0 und 100°C, vorzugsweise zwischen 40 und 80°C

Nach der Hydrophobierung weisen die Schichtsilikate einen Schichtabstand von 10 bis 40 Å, vorzugsweise von 13 bis 20 Å auf. Der Schichtabstand bedeutet üblicherweise den Abstand von der Schichtunterkante der oberen Schicht zur Schichtoberkante der unteren Schicht. Die Länge der Blättchen beträgt üblicherweise bis zu 2000 Å, vorzugsweise bis zu 1500 Å.

Das auf die vorstehende Weise hydrophobierte Schichtsilikat kann anschließend in Suspension oder als Feststoff mit den Polyamid-Monomeren oder -Präpolymeren gemischt und die Polykondensation in üblicher Weise durchgeführt werden.

Hierbei ist es möglich, den Schichtabstand weiter zu vergrößern, indem man das Schichtsilikat mit Polyamidmonomeren bzw. Präpolymeren bei Temperaturen von 25 bis 300, vorzugsweise von 100 bis 280 und insbesondere von 200 bis 260°C über eine Verweilzeit von 5 bis 120 Min, vorzugsweise von 10 bis 60 Min umsetzt (sog. Quellung). Je nach Dauer der Verweilzeit und Art des gewählten Monomeren vergrößert sich der Schichtabstand zusätzlich um 10 bis 150, vorzugsweise um 20 bis 50 A. Anschließend führt man die Polykondensation in üblicher Weise durch. Besonders vorteilhaft wird die Polykondensation unter gleichzeitiger Scherung durchgeführt, wobei vorzugsweise Scherspannungen gemäß DIN 11 443 von 10 bis 10⁵ Pa, insbesondere 10² bis 10⁴ Pa vorliegen.

Die Zusatzstoffe D) können hierbei zu den Monomeren oder zur Präpolymerschmelze (Entgasungsextruder) hinzugegeben werden.

Als Komponente D) können die erfindungsgemäßen Formmassen bis zu 70, vorzugsweise bis zu 50 Gew.-% weiterer Zusatzstoffe enthalten.

Als faser- oder teilchenförmige Füllstoffe D) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen von 1 bis 50 Gew.-%, insbesondere 5 bis 40, vorzugsweise 10 bis 40 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit den Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben: 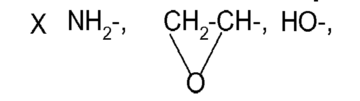
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf D)) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 %. Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente D) können die erfindungsgemäßen Formmassen 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester- oder Amide von Fettsäuren mit 10 bis 44 C-Atomen, vorzugsweise mit 12 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Penta-erythrittetrastearat.

Es können auch Mischungen verschiedener Ester oder Amide oder Ester mit Amiden in Kombination eingesetzt werden, wobei das Mischungsverhältnis beliebig ist.

Als Komponente D) können die erfindungsgemäßen Formmassen 0,05 bis 3, vorzugsweise 0,1 bis 1,5 und insbesondere 0,1 bis 1 Gew.-% eines Cu-Stabilisators, vorzugsweise eines Cu-(1)-Halogenids, insbesondere in Mischung mit einem Alkalihalogenid, vorzugsweise KJ, insbesondere im Verhältnis 1 : 4., oder eines sterisch gehinderten Phenols oder deren Mischungen enthalten.

Als Salze des einwertigen Kupfers kommen vorzugsweise Kupfer(1)-Acetat, Kupfer(1)-Chlorid, - Bromid und -Jodid in Frage. Diese sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(1)-Jodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6 und Polyamid 6.6.

Als sterisch gehinderte Phenole D) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 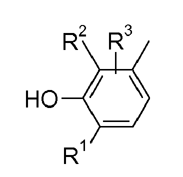 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 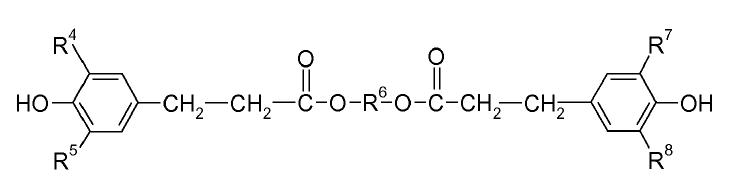 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die dieser Formel entsprechen, sind

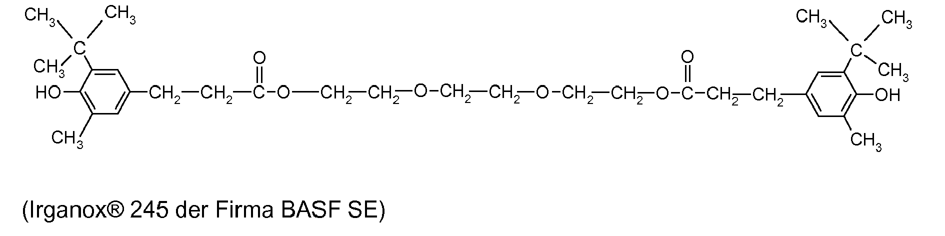

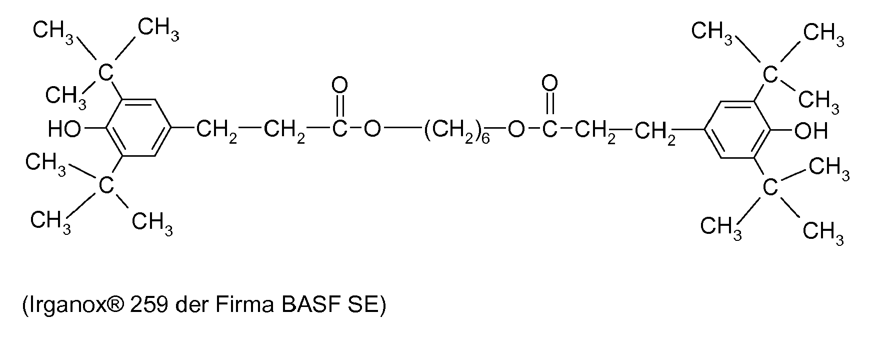

Beispielhaft genannt seien insgesamt als sterisch gehinderte Phenole:
2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxy-phenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydro-cinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma BASF SE, das besonders gut geeignet ist.

Die Antioxidantien D), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis D) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Als Komponente D) können die erfindungsgemäßen Formmassen 0,05 bis 5, vorzugsweise 0,1 bis 2 und insbesondere 0,25 bis 1,5 Gew.-% eines Nigrosins enthalten.

Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten und dergleichen, sowie als Mikroskopiefarbstoffe Verwendung finden.

Man gewinnt die Nigrosine technisch durch Erhitzen von Nitrobenzol, Anilin und salzsaurem Anilin mit metall. Eisen und FeC1₃ (Name von lateinischem niger = schwarz).

Die Komponente D) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Weitere übliche Zusatzstoffe D) sind beispielsweise in Mengen bis zu 25, vorzugsweise bis zu 20 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im Folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopen-tadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R'C(CO0R²)=C(CO0R³)R⁴ (I)

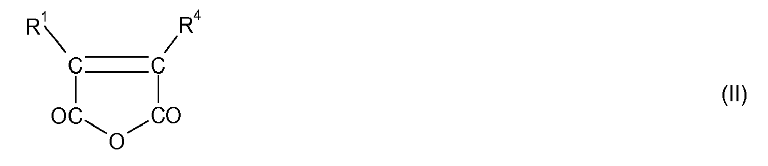

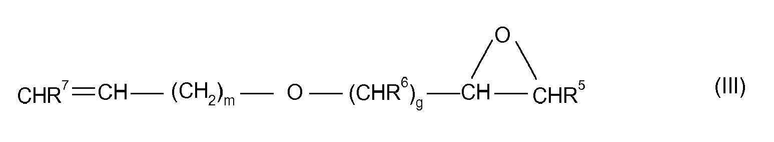

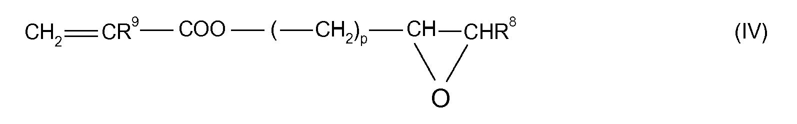

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen,
- 0,1 bis 40,: insbesondere 0,3 bis 20 Gew.-% Glycidylacrylat und/oder Glycidyl-methacrylat, (Meth)acrylsäure und/oder Maleinsäureanhydrid, und
- 1 bis 45,: insbesondere 5 bis 40 Gew.-% n-Butylacrylat und/oder 2-Ethylhexyl-acrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, a-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 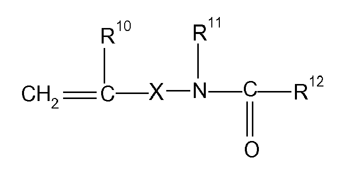 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit 0- oder N-haltigen Gruppen substituiert sein können,
- X: eine chemische Bindung, eine C₁- bis Cio-Alkylen- oder C₆-C₁₂-Arylengruppe oder 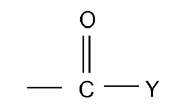
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethyl-amino)ethylacrylat, (N,N-Dimethylamino)-methylacrylat und (N,N-Diethylamino)ethyl-acrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allyl-acrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im Allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuk-typen eingesetzt werden.

Als Komponente D) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, usw. enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) und C) sowie gegebenenfalls D) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine bessere P-Stabilität bei gleichzeitig guter Mechanik, aus.

Diese eignen sich zur Herstellung von Fasern, Folien und Formkörpern jeglicher Art. Nachfolgend sind einige Beispiele genannt: Zylinderkopfhauben, Motorradabdeckungen, Ansaugrohre, Ladeluftkühlerkappen, Steckverbinder, Zahnräder, Lüfterräder, Kühlwasserkästen.

Im E/E-Bereich können mit fließverbesserten Polyamiden Stecker, Steckerteile, Steckverbinder, Membranschalter, Leiterplattenbaugruppen, mikroelektronische Bauteile, Spulen, I/O Steckverbinder, Stecker für Leiterplatten (PCB), Stecker für flexible Leiterplatten (FPC), Stecker für flexible integrierte Schaltkreise (FFC), High-Speed Steckverbindungen, Klemmleisten, Anschlussstecker, Gerätestecker, Kabelbaumkomponenten, Schaltungsträger, Schaltungsträgerkomponenten, dreidimensional spritzgegossene Schaltungsträger, elektrische Verbindungselemente, mechatronische Komponenten hergestellt werden.

Im Auto-Innenraum ist eine Verwendung für Armaturentafeln, Lenkstockschalter, Sitzteile, Kopfstützen, Mittelkonsolen, Getriebe-Komponenten und Türmodule, im Auto-Außenraum für Türgriffe, Außenspiegelkomponenten, Scheibenwischerkomponenten, Scheibenwischerschutzgehäuse, Ziergitter, Dachreling, Schiebedachrahmen, Motorabdeckungen, Zylinderkopfhauben, Ansaugrohre (insbesondere Ansaugkrümmer), Scheibenwischer sowie Karosserieaußenteile möglich.

Für den Küchen- und Haushaltsbereich ist der Einsatz fließverbesserter Polyamide zur Herstellung von Komponenten für Küchengeräte, wie z.B. Friteusen, Bügeleisen, Knöpfe, sowie Anwendungen im Garten-Freizeitbereich, z.B. Komponenten für Bewässerungssysteme oder Gartengeräte und Türgriffe möglich.

### Beispiele

Es wurden folgende Komponenten eingesetzt:
Komponente A
Polyamid 66 mit einer Viskositätszahl VZ von 150 ml/g, gemessen als 0,5 gew.-%ige Lösung in 96 gew.-%iger Schwefelsäure bei 25°C nach ISO 307. (Es wurde Ultramid® A27der BASF SE verwendet).
Komponente B
Roter Phosphor (53 gew.-% iger Masterbatch in Komponente 03)
Komponente C/1V (DE 197 14 900)
Bentonit mit Bis (2-hydroxyethyl)methylstearylammoniumsalz als Hydrophobierungsmittel.
90 meq/100 g Bentonit = lonenaustauschkapazität (IAK) vollständig hydrophobiert (Cloisite® 30b der Firma Rockwood)
Komponente C/1
Bentonit mit Dimethyldistearylammoniumsalz
40 % hydrophobiert (Nanofil® SE 3010 der Firma Rockwood)
Komponente C/2
Bentonit mit Octadecylammoniumsalz
30 hydrophobiert (Nanomer® I. 30 P der Firma Nanocor)
Komponente D/1
Glasfasern
Komponente D/2

| | |
|---|---|
| Batch aus | 50 % ZnO₂ |
| | 25 % Ca-stearat |
| | 25 % N,N'-Hexamethylen-bis-3,5-di-tert.-butyl-4-hydroxyhydrocinnamid (Irganox ® 1098 der BASF SE) |

Komponente D/3
Ein Ethylen-n-Butylacrylat-Acrylsäure-MSA-Copolymer (Gewichtsverhältnis: 59,35:34:6:0.65)

Die Herstellung der Formmassen erfolgte auf einem Zweischneckenextruder ZSK 25, 27 kg/h Durchsatz bei 270°C.
Es wurden folgende Messungen durchgeführt:

Der MVR wurde gemäß ISO 1133 bestimmt (bei 275°C, 4 min. Aufschmelzzeit, 5 kg) die VZ gemäß ISO 307 (bei c=5 gl/ in 96 %-iger Schwefelsäure).
UL 94 wurde gemäß IEC 60695-11-10,
GWIT wurde gemäß IEC 60695-2-13 bestimmt.

Die Phosphorstabilität wurde gemäß folgendem Protokoll gemessen:
Es wurden Normkleinstäbe (50x6x4 mm) spritzgegossen. 80 g Normkleinstäbe wurden in einen 250 ml Becher eingewogen und mit 150 g VE Wasser bedeckt, das Gesamtgewicht notiert. Die Stäbe waren mit Wasser bedeckt. Der Becher wurde abgedeckt und in einem Wärmeschrank bei 60 °C belassen. Einmal pro Woche wurde die Wassermenge nachgefüllt. Nach 14/30/50/100 Tagen wurden die Proben jeweils auf RT gekühlt, 10 ml entnommen und der P-Gehalt in ppm mittels Atomemissionsspektroskopie bestimmt.
Die Mechanik wurde gemäß ISO 527-1 und 527-2 (Zugversuch) und ISO 179-2 (Charpyungekerbt) gemessen.

Die Zusammensetzungen der Formmassen und die Ergebnisse der Messungen sind den Tabellen zu entnehmen.

**Tabelle 1:**

| | Komponente A [Gew.-%] | Komponente B [Gew.-%] | Komponente C [Gew.-%] | Komponente D1 [Gew.-%] | Komponente D/2 [Gew.-%] | Komponente D/3 [Gew.-%] |
|---|---|---|---|---|---|---|
| Vgl. 1 | 60,34 | 12,26 | - | 26 | 1,4 | - |
| Vgl. 2 | 58,34 | 12.26 | 2 C/1V | 26 | 1,4 | - |
| Bsp. 1 | 58,34 | 12,26 | 2 C/2 | 26 | 1,4 | - |
| Bsp. 2 | 59,28 | 10,42 | 2 C/2 | 26 | 1,4 | 0,9 |
| Bsp. 3 | 60,28 | 10,42 | 1 C/1 | 26 | 1,4 | 0,9 |
| Bsp. 4 | 59,28 | 10,42 | 2 C/1 | 26 | 1,4 | 0,9 |

**Tabelle 2:**

| | Fließspirale | Charpy | Reißdehnung | E-Modul | Streck Spannung |
|---|---|---|---|---|---|
| | [cm] | [kJ/m2] | [%] | [GPa] | [MPa] |
| Vgl.1 | 38,5 | 69 | 2,8 | 9200 | 137 |
| Vgl. 2 | 37 | 59 | 2,5 | 9600 | 136 |
| Bsp.1 | 36,5 | 57 | 2,4 | 9700 | 135 |
| Bsp. 2 | 37,5 | 56 | 2,5 | 9850 | 137 |
| Bsp. 3 | 32 | 70 | 2,8 | 9400 | 133 |
| Bsp. 4 | 34 | 68 | 2,8 | 9300 | 132 |

**Tabelle 3:**

| | U L 94 | | U L 94 | | GWIT |
|---|---|---|---|---|---|
| | 0,8 mm | | 0,8 mm | | 1,5 |
| | (2 Tage) | | (7 Tage) | | mm |
| | | Brennzeit | | Brennzeit | |
| Vgl. 1 | V1 | 65 | V1 | 44 | 0/0 |
| Vgl. 2 | V0 | 45 | V1 | 62 | 1/0 |
| Bsp.1 | V0 | 22 | V0 | 43 | 3/3 |
| Bsp. 2 | V0 | 42 | V0 | 50 | 3/3 |
| Bsp. 3 | V0 | 30 | V0 | 43 | 3/3 |
| Bsp. 4 | V0 | 40 | V0 | 28 | 3/3 |

**Tabelle 4:**

| | P Stabilität (ppm) | | | |
|---|---|---|---|---|
| | 15 T | 30 T | 50 T | 100 T |
| Vgl. 1 | 31 | 50 | 65 | 100 |
| Vgl. 2 | - | - | - | - |
| Bsp. 1 | - | - | - | - |
| Bsp. 2 | 17 | 25 | 37 | 48 |
| Bsp. 3 | 22 | 35 | 47 | 65 |
| Bsp. 4 | - | - | - | - |

## Patentansprüche

1. Thermoplastische Formmassen, enthaltend
A) 10 bis 97 Gew. % eines thermoplastischen Polyamides
B) 1 bis 20 Gew. % roter Phosphor
C) 0,1 bis 10 Gew. % eines delaminierten Schichtsilikates mit überwiegend unpolaren Gruppen
D) 0 bis 70 Gew. % weiterer Zusatzstoffe,
wobei die Summe der Komponenten A) bis D) 100 % ergibt.

2. Thermoplastische Formmassen nach Anspruch 1 enthaltend 1 bis 50 Gew. % eines faserförmigen oder teilchenförmigen Fülllstoffes D).

3. Thermoplastische Formmassen nach den Ansprüchen 1 oder 2, enthaltend als Komponente C) Bentonit.

4. Thermoplastische Formmassen nach den Ansprüchen 1 bis 3, in denen die Komponente C) ausschließlich unpolare Gruppen enthält.

5. Thermoplastische Formmassen nach den Ansprüchen 1 bis 4, in denen die Hydrophobierungsmittel der Komponente C) aus Dimethyldistearylammoniumsalzen oder Octadecylammoniumsalzen oder deren Mischungen aufgebaut ist.

6. Thermoplastische Formmassen nach den Ansprüchen 1 bis 5, in denen der Gehalt an Hydrophobierungsmittel, bezogen auf 100 Gew-% C) 25 bis 50 % beträgt.

7. Verwendung der thermoplastischen Formmassen gemäß den Ansprüchen 1 bis 5 zur Herstellung von Fasern, Folien und Formkörpern jeglicher Art.

8. Fasern, Folien und Formkörper jeglicher Art erhältlich aus den thermoplastischen Formmassen gemäß den Ansprüchen 1 bis 5.
